# EUROPEAN PATENT APPLICATION

(11) **EP 4 186 952 A1**
(43) Date of publication of application: **31.05.2023**
(21) Application number: 21210535.7
(22) Date of filing: 25.11.2021
(51) Int. Cl.: C09D 123/08, B32B 15/00, B32B 15/085

(54) **EXTRUSION SINGLE LAYER COATINGS**

(71) Applicant: Henkel AG & Co. KGaA, 40589 Düsseldorf (DE)
(72) Inventor: DE ZEEUW, Ard, 40593 Düsseldorf (DE); GUTIÉRREZ DÍAZ, Jordán, 40223 Düsseldorf (DE); TROLL, Angelika, 40593 Düsseldorf (DE); OLIVA, Ramona, 40723 Hilden (DE); KLUG, Christian, 40597 Düsseldorf (DE); KASPER, Dirk, 40597 Düsseldorf (DE); MUELLER, Markus, 40239 Düsseldorf (DE); HACHMANN-THIESSEN, Heiko, 22457 Hamburg (DE)
(74) Representative: Viering, Jentschura & Partner mbB Patent- und Rechtsanwälte

(57) **Abstract**

The present invention pertains to polymer compositions for extrusion coating of metal sheets, to a method of producing a coated metal sheet using such a polymer composition, to coated metal sheets obtainable in such a method, and to the use of such coated metal sheets for the production of food or beverage containers, preferably beverage cans.

## Description

The present invention pertains to polymer compositions for extrusion coating of metal sheets, to a method of producing a coated metal sheet using such a polymer composition, to coated metal sheets obtainable in such a method, and to the use of such coated metal sheets for the production of food or beverage containers, preferably beverage cans.

Metal sheets in general are usually coated so as to improve the surface function of the substrate and/or protect the substrate from external influences. Metal sheets, such as aluminium sheets, which are used in particular for producing food and/or beverage containers, such as beverage cans, especially for producing the ends of cans, in particular have to be protected against corrosion caused by contents of the foodstuffs/beverages. To this end, lacquer systems have been used hitherto, especially for coating the can end strip of beverage cans, and after being applied, usually via roll-to-roll application, they have to undergo a stoving process. In addition to the high solvent consumption and the complex disposal of exhaust air from such installations, the lacquer systems also require relatively high stoving temperatures ranging from 230 to 270 °C, so that the aluminium strip undergoes a significant softening. Thus, in order to still provide the adequate stability and strength, expensive aluminium alloys with a high magnesium content have to be used which, moreover, are more susceptible to corrosion. An alternative coating application method is lamination, which, however, requires the pre-conditioning of the metal parts in the form of application of one or more adhesion layer/primer coatings. Moreover, both roll-to-roll application and lamination suffer from slow processing speeds.

There is a need, therefore, for methods of producing a coated metal sheet, such as coated aluminium sheets, which are altogether less energy- and time-consuming in not requiring solvent treatment, curing, and/or waste management.

This need is met by the objects of the present invention, as provided herein are polymer compositions for extrusion coating of metal sheets as well as methods producing a coated metal sheet using such a polymer composition.

In one aspect, the present invention thus relates to a polymer composition for extrusion coating of metal sheets, comprising at least one olefin copolymer of at least one olefin and at least one compound copolymerizable with an olefin and comprising at least one free carboxyl group, wherein the at least one olefin copolymer is present in an amount of about 2 to 99 wt.-%, preferably about 10 to 95 wt.-%, more preferably about 20 to 80 wt.-%, still more preferably about 25 to 60 wt.-%, particularly about 30 to 60 wt.-%, based on the total weight of the polymer composition.

In another aspect, the present invention relates to a method for producing a coated metal sheet, comprising the steps of:
i) feeding the metal sheet into an extrusion coating arrangement, and
ii) extrusion coating of at least one surface of the metal sheet with the polymer composition of the present invention to obtain a coated metal sheet.

In yet another aspect, the present invention relates to a metal sheet obtainable in a method of the present invention.

In still another aspect, the present invention further relates to the of a coated metal sheet of the present invention for the production of food or beverage containers, preferably beverage cans

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e., 1, 2, 3, 4, 5, 6, 7, 8, 9 or more. "At least one", as used herein in relation to any component, refers to the number of chemically different molecules, i.e., to the number of different types of the referenced species, but not to the total number of molecules.

In the present specification, the terms "a" and "an" and "at least one" are the same as the term "one or more" and can be employed interchangeably.

"About", as used herein in relation to a numerical value, means said value ±10%, preferably ±5%.

All percentages given herein in relation to the compositions or formulations relate to weight % relative to the total weight of the respective composition or formula, if not explicitly stated otherwise.

In a first aspect, the present invention pertains to a polymer composition for extrusion coating of metal sheets. A polymer composition according to the present invention comprises at least one olefin copolymer of at least one olefin and at least one compound copolymerizable with an olefin and comprising at least one free carboxyl group. The at least one olefin copolymer is present in an amount of about 2 to 99 wt.-%, for instance in an amount of 2, 3, 4, 5, 6, 7, 8, 9, 10, 11, 12, 13, 14, 15, 16, 17, 18, 19, 20, 21, 22, 23, 24, 25, 30, 35, 40, 45, 50, 55, 60, 65, 70, 75, 80, 85, 90, 95 or 99 wt.-%, preferably in an amount of about 10 to 95 wt.-%, more preferably about 20 to 80 wt.-%, still more preferably about 25 to 60 wt.-%, particularly about 30 to 60 wt.-%, based on the total weight of the polymer composition.

As the olefin, either ethylene or an α-olefin having 3 to 20 carbon atoms are preferred. Examples of the α-olefin having 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof. The aforementioned olefinic compounds may be used alone or in combination of two or more of these. In various embodiments, the olefin is preferably ethylene.

A "compound copolymerizable with an olefin and comprising at least one free carboxyl group", in the context of the present invention, refers to a compound that can be copolymerized with an olefin so as to obtain an olefin copolymer and that comprises at least one free carboxyl group, for instance one, two or three free carboxyl groups, preferably one free carboxyl group. The term "free carboxyl group" shall encompass the acid form and in case that more than one free carboxyl group is present also the anhydride form of two free carboxyl groups which have intrinsically reacted to form the anhydride. Therefore, an anhydride group contained in a compound copolymerizable with an olefin represents two free carboxyl groups in the sense of this invention. In the context of the present invention, the term "compound copolymerizable with an olefin and comprising at least one free carboxyl group" refers to carboxyl acids, such as maleic acid, as well as acid anhydrides, such as maleic acid anhydride. In the context of the present invention, the term "compound copolymerizable with an olefin and comprising at least one free carboxyl group" includes compounds that can be grafted to a backbone comprised of olefins, such as maleic acid anhydride. Examples of compounds copolymerizable with an olefin and comprising at least one free carboxyl group include, without limitation, unsaturated carboxylic acids or anhydrides thereof and vinyl carboxylates, specifically, unsaturated carboxylic acids or anhydrides thereof, particularly selected from the group consisting of acrylic acid, methacrylic acid, and maleic acid. Thus, in various embodiments, the at least one compound copolymerizable with an olefin and comprising at least one free carboxyl group is selected from the group consisting of acrylic acid, methacrylic acid, and maleic acid, preferably from the group consisting of acrylic acid and methacrylic acid.

In various embodiments, in the present invention, preference is given olefin copolymers, wherein the amount of compound copolymerizable with an olefin and comprising at least one free carboxyl group in the olefin copolymer is in the range of about 1 to about 40 wt.-%, preferably about 2 to about 30 wt.-%, more preferably about 3 to about 25 wt.-%, for instance bur without limitation about 1, 2, 3, 4, 5, 6, 7, 8, 9, 10, 11, 12, 13, 14, 15, 16, 17, 18, 19, 20, 21, 22, 23, 24 or 25 wt.-%, based on the total weight of the olefin copolymer. Particularly, the amount of compound copolymerizable with an olefin and comprising at least one free carboxyl group in the olefin copolymer is from about 3 to about 30 wt.-%, preferably from about 5 to about 25 wt.-%, such as from about 7 to about 20 wt.-%.

Exemplary ethylene-acrylic acid (E-AA) and ethylene-methacrylic acid (E-MAA) copolymers are those available under the trademarks PRIMACOR^{™}, commercially available from The Dow Chemical Company, NUCREL^{™}, commercially available from E.I. DuPont de Nemours, and ESCOR^{™}, commercially available from ExxonMobil Chemical Company and described in U.S. Pat. Nos. 4,599,392, 4,988,781, and 5,938,437. Further non-limiting Examples include polymers of the low/medium/high density ethylene/acrylic acid/acrylate copolymers and ethylene/butyl/acrylate copolymers of the Lucalen^{™} series commercially available from Lyondellbasell, the maleic acid anhydride modified low-crystalline metallocene propylene-ethylene copolymers of the Licocene^{™} series commercially available from Clariant, the ethylene terpolymers with reactive functions such as maleic anhydride or epoxide (glycidyl methacrylate) of the Lotader^{™} and Orevac^{™} series commercially available from SK Functional Polymers.

In various embodiments, it is preferred that the polymer composition of the present invention further comprises at least one olefin homopolymer and/or at least one olefin copolymer of at least one olefin and at least one compound copolymerizable with an olefin and not comprising a free carboxyl group. In other words, the polymer composition of the present invention may comprise a further olefinic polymer component, which, however, is different from the at least one olefin copolymer of at least one olefin and at least one compound copolymerizable with an olefin and comprising at least one free carboxyl group.

In this context, the olefin may be selected from ethylene and α-olefins having 3 to 20 carbon atoms, such as α-olefins having 4 to 12 carbon atoms, such as α-olefins having 4 to 8 carbon atoms, such as 1-butene, 1-hexene or 1-octene.

While any comonomers may be selected from non-polar components, particularly from the list of olefin monomers indicated above, any comonomer may alternatively be selected from polar comonomers copolymerizable with an olefin. As a polar comonomer, comonomers containing hydroxyl group(s), alkoxy group(s), carbonyl group(s), ether group(s) or ester group(s), or a mixture thereof, can be used. Particularly, comonomers containing ester group(s) can be used as said polar comonomer.

In various embodiments, said additional olefinic polymer component that is different from the at least one olefin copolymer of at least one olefin and at least one compound copolymerizable with an olefin and comprising at least one free carboxyl group is selected from the group consisting of ethylene homopolymers, propylene homopolymers, and mixtures of one or more ethylene homopolymers and one or more propylene homopolymers.

In various embodiments, said additional olefinic polymer component may be selected from the group consisting of low density polyethylene (LDPE) homopolymers or copolymers, linear low density polyethylene (LLDPE) homopolymers and copolymers, medium density polyethylene (MDPE) homopolymers and copolymers, high density polyethylene (HDPE) homopolymers and copolymers, high molecular weight polyethylene (PE-HMW) homopolymers and copolymers, ultra-high molecular weight polyethylene (PE-UHMW) homopolymers, and polypropylene homopolymers and copolymers, and mixtures thereof.

Accordingly, in various embodiments, said additional olefinic polymer component that is different from the at least one olefin copolymer of at least one olefin and at least one compound copolymerizable with an olefin and comprising at least one free carboxyl group generally can be a homopolymer or a copolymer. If it is a copolymer, such as a polyethylene (PE) or a polypropylene (PP) copolymer, it can be a binary copolymer, i.e., the polymer contains ethylene or propylene, respectively, and one comonomer, or a terpolymer, i.e., the polymer contains ethylene or propylene, respectively, and two or three comonomers.

Examples of suitable polyolefins that are different from the at least one olefin copolymer of at least one olefin and at least one compound copolymerizable with an olefin and comprising at least one free carboxyl group are commercially available under the trademarks Hostalen^{™} from Lyondellbasell and Lupolen^{™} from Lyondellbasell, polyethylenes commercially available under the trademarks Alathon^{™}, Dyneema^{™}, Polythen^{™}, Spectra^{™}, Trolen^{™} and Vestolen^{™}.

In various embodiments, the at least one olefinic polymer component that is different from the at least one olefin copolymer of at least one olefin and at least one compound copolymerizable with an olefin and comprising at least one free carboxyl group is present in the polymer composition in an amount of about 1 to 98 wt.-%, for instance about 1, 2, 3, 4, 5, 6, 7, 8, 9, 10, 11, 12, 13, 14, 15, 16, 17, 18, 19, 20, 21, 22, 23, 24, 25, 30, 35, 40, 45, 50, 55, 60, 65, 70, 75, 80, 85, 90, 95 or 98 wt.-%, preferably in an amount of about 3 to 90 wt.-%, more preferably about 5 to 80 wt.-%, still more preferably about 7 to 60 wt.-%, particularly about 10 to 50 wt.-%, based on the total weight of the polymer composition.

Methods for the production of the aforementioned olefinic polymers are generally known in the art. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: Highpressure, R. Klimesch, D. Littmann and F.-O. Mähling pp. 7181-7184.

In various embodiments, the polymer composition has a *T*_{g} of at least 85 °C, preferably at least 90 °C, more preferably at least 100 °C, still more preferably at least 120 °C, particularly at least 130 °C. A *T*_{g} of at least 85 °C is preferable in terms of pasteurization compatibility, and a *T*_{g} of at least 130 °C is preferable in the context of sterilization of the resultant product.

Physical characteristics of the polymer composition, such as melt viscosity, rheology, tensile strength, surface hardness, coefficient of friction, wear resistance, and crystallinity, may be further adapted and modified by incorporation of one or more additional components, examples of which include, without limitation, additives selected from the group consisting of additional polymers, tackifiers, antistatic agents, slip/mould release agents, waxes, stabilizers, antioxidants, plasticizers, nucleating agents, thixotroping agents, pigments and colorants, dyestuffs, fluorescing agents and fillers, including nanofillers. Typically, these additives may be present at less than 2 wt.-% each, more preferably less than 0.5 wt.-% each, relative to the total weight of the polymer composition.

For instance, the incorporation of one or more waxes may serve to modify the coefficient of friction. Waxes suitable for use in the present invention include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. High density low molecular weight polyethylene waxes, by-product polyethylene waxes and Fischer-Tropsch waxes are conventionally referred to in the art as synthetic high melting point waxes. Modified waxes, including vinyl acetate modified waxes such as AC-400 (Honeywell) and MC-400 (available from Marcus Oil and Company), maleic anhydride modified waxes such as Epolene C-18 (available from Eastman Chemical) and AC-575A and AC-575P (available from Honeywell) and oxidized waxes are also useful in the practice of the invention. Callista^{®} 122, 158, 144, 435, and 152 available from Shell Lubricants, Houston, Tex.; Sasolwax C80 and Sasolwax H-1, H-4 and H-8, Fischer-Tropsch waxes available from Sasol Wax are also preferred waxes for use in the practice of the invention. Hydrogenated castor oil is also suitable for employment in this context.

Paraffin waxes that can be used in the practice of the invention include Pacemaker^{®} 30, 32, 35, 37, 40, 42, 45 & 53 available from Citgo Petroleum, Co.; Astor Okerin^{®} 236 available from Honeywell; R-7152 Paraffin Wax available from Moore & Munger; R-2540 available from Moore and Munger; and other paraffinic waxes such as those available from Sasol Wax under the product designations Sasolwax 5603, 6203 and 6805.

The microcrystalline waxes useful in the context of the present invention include those having 50 percent by weight or more cyclo or branched alkanes with a length of between 30 and 100 carbons. They are generally less crystalline than paraffin and polyethylene waxes, and have melting points of greater than about 70 °C Examples include Victory^{®} Amber Wax, a 70°C melting point wax available from Baker Petrolite Corp.; Bareco^{®} ES-796 Amber Wax, a 70 °C melt point wax available from Bareco; Besquare^{®} 175 and 195 Amber Waxes and 80 °C and 90 °C melt point microcrystalline waxes both available from Baker Petrolite Corp.; Indramic^{®} 91, a 90 °C melt point wax available from Industrial Raw Materials; and Petrowax^{®} 9508 Light, a 90 °C melt point wax available from Petrowax. Other examples of microcrystalline waxes are Sasolwax 3971 available from Sasol Wax and Microwax K4001 available from Alfred Kochem GmBH.

Exemplary high density low molecular weight polyethylene waxes falling within this category include ethylene homopolymers available from Backer Petrolite Corp. as Polywax^{™} 500, Polywax^{™} 1500 and Polywax^{™} 2000. Polywax^{™} 2000 has a molecular weight of approximately 2000, an Mw/Mn of approximately 1.0, a density at 16 °C of about 0.97 g/cm³, and a melting point of approximately 126 °C.

Incorporation of one or more polyorganosiloxanes may improve wear resistance of the resultant coating, particularly silanol-terminated polydialkylsiloxanes as well as end-capped polyorganosiloxanes. Non-limiting examples of commercially available polyorganosiloxanes suitable for employment in the context of the present invention include.

Stabilizers and/or antioxidants may be added to protect the polymer composition from degradation caused by reaction with oxygen induced by such things as heat or light.

Among the applicable stabilizers or antioxidants suitable, high molecular weight hindered phenols and multifunctional phenols such as sulfur and phosphorous-containing phenol may be mentioned. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-d i-tert-butyl-4-hydroxy-phenyl)-propionate].

The performance of these antioxidants may be further enhanced by utilizing, in conjunction therewith, known synergists such as, for example, thiodipropionate esters and phosphites. Distearylthiodipropionate is particularly useful.

Such antioxidants are commercially available from Ciba Specialty Chemicals and include Irganox^{®} 565, 1010, 1076 and 1726 which are hindered phenols. These are primary antioxidants which act as radical scavengers and may be used alone or in combination with other antioxidants such as phosphite antioxidants like Irgafos^{®} 168 available from Ciba Specialty Chemicals. Phosphite catalysts are considered secondary catalysts and are not generally used alone. These are primarily used as peroxide decomposers. Other available catalysts are Cyanox^{®} LTDP available from Cytec Industries and Ethanox^{®} 330 available from Albemarle Corp. Many such antioxidants are available either to be used alone or in combination with other such antioxidants.

Filler suitable for employment in the context of the present invention are generally known in the art, may be categorized as organic and mineral fillers, non-limiting examples of which include silicates, talc, calcium carbonates, clays and carbon black. For instance, the use of layered silicates allows for adjustment of mechanical strength of the coating, which allows for tailoring of processing and final end-use properties.

In a further aspect, the present further provides for a method for producing a coated metal sheet, comprising the steps of:
i) feeding the metal sheet into an extrusion coating arrangement, and
ii) extrusion coating of at least one surface of the metal sheet with the polymer composition according to the present invention, as herein described above, to obtain a coated metal sheet.

In various embodiments, the metal sheet is an aluminium sheet or an aluminium alloy sheet.

In various embodiments, the metal sheet may be pre-heated prior to step i) of the present invention. Pre-heating the metal sheet may improve adhesion of polymer composition which is extruded thereon. For instance, the metals sheet may be heated to a temperature of about 30, 40, 50, 60, 70, 80, 90, 100, 110, 120, 130, 140, 150, 160 or 170 °C.

The polymer composition may be applied to only one surface of the metal sheet or more than just one surface of the metal sheet. If more than just one surface of the metal sheet is to be coated with a polymer composition of the present invention, this may be realized *via* unilateral or bilateral extrusion application.

The advantageous physical properties of the polymer composition of the present invention allow for extrusion application thereof onto the surface of the metal sheet in the form of a curtain, thus covering the entire breadth of a metal sheet fed into and passing through the extrusion arrangement, and obviating the need for distribution of the coating composition by means of rolls or the like. This altogether speeds up the entire process and allows for a more time-, energy- and resource-efficient coating process compared to state-of-the-art methods. Therefore, in various embodiments, the polymer composition is applied in the form of a curtain. Generally, this is realized by arranging and adapting the extruder nozzles, such that a curtain of extruded product is dispensed.

Once the polymer composition of the present invention is extrusion applied onto at least one surface of the metal sheet, the coated metal sheet may be cooled, for instance using air- and/or a water-based cooling system. Thus, in various embodiments, the method of the present invention comprises a step iii) of cooling the coated metal sheet. Prior thereto or alternatively, the coated metal sheet obtained after step ii) of the present invention may, according to some embodiments, be heated to a temperature of more than 10 or 20 °C, preferably more than 30 °C above the melting point of the polymer composition directly after extrusion application of the polymer composition onto the surface of the metal sheet for a period of about 0.5 to 10 seconds, particularly 0.5 to 3 seconds, which results in an optimised adhesion of the coating to the metal sheet and overall relaxing of the extruded coating.

According to preferred embodiments, the resultant coating has a thickness of about 0.2-30 µm, preferably about 0.5-20 µm, more preferably about 1-15 µm, still more preferably 2-12 µm, such as about 2, 3, 4, 5, 6, 7, 8, 9, 10, 11 or 12 µm.

Moreover, according to various embodiments, the method of the present invention further comprises a step of subjecting the metal sheet to a pre-treatment process prior to step i), preferably a chromium-free pre-treatment process.

In various embodiments, the method of the present invention preferably does not comprise the application of an adhesion layer prior to step ii). In various further embodiments, the method of the present invention preferably does not comprise a step of pre-treating the metal sheet prior to step i).

It is understood that all embodiments disclosed herein in relation to the compositions, methods, and uses of the invention are similarly applicable to articles formed therefrom/thereby, insofar applicable, and *vice versa.*

Thus, according to a further aspect, the present invention also relates to a coated metal sheet obtainable in a method as herein described.

In yet another aspect, the present invention relates to the use of a coated metal sheet of the present invention for the production of food or beverage containers, preferably beverage cans, more particularly the ends of beverage cans.

## Claims

1. Polymer composition for extrusion coating of metal sheets, comprising at least one olefin copolymer of at least one olefin and at least one compound copolymerizable with an olefin and comprising at least one free carboxyl group, wherein the at least one olefin copolymer is present in an amount of about 2 to 99 wt.-%, for instance in an amount of 2, 3, 4, 5, 6, 7, 8, 9, 10, 11, 12, 13, 14, 15, 16, 17, 18, 19, 20, 21, 22, 23, 24, 25, 30, 35, 40, 45, 50, 55, 60, 65, 70, 75, 80, 85, 90, 95 or 99 wt.-%, preferably in an amount of about 10 to 95 wt.-%, more preferably about 20 to 80 wt.-%, still more preferably about 25 to 60 wt.-%, particularly about 30 to 60 wt.-%, based on the total weight of the polymer composition.

2. The polymer composition according to claim 1, wherein the amount of compound copolymerizable with an olefin and comprising at least one free carboxyl group in the olefin copolymer is in the range of about 1 to about 40 wt.-%, preferably about 2 to about 30 wt.-%, more preferably about 3 to about 25 wt.-%, based on the total weight of the olefin copolymer.

3. The polymer composition according to claim 1 or claim 2, wherein the composition has a *T*_{g} of at least 85 °C, preferably at least 90 °C, more preferably at least 100 °C, still more preferably at least 120 °C, particularly at least 130 °C.

4. The polymer composition according to any one of claims 1 to 3, further comprising at least one olefin homopolymer and/or at least one olefin copolymer of at least one olefin and at least one compound copolymerizable with an olefin and not comprising a free carboxyl group.

5. The polymer composition according to claim 4, comprising at least one polymer selected from the group consisting of ethylene homopolymers or copolymers, propylene homopolymers or copolymers, and mixtures of one or more ethylene homopolymers and/or copolymers and one or more propylene homopolymers and/or copolymers.

6. The polymer composition according to claim 5, comprising at least one ethylene homopolymer selected from the group consisting of low density polyethylene (LDPE) homopolymers or copolymers, linear low density polyethylene (LLDPE) homopolymers and copolymers, medium density polyethylene (MDPE) homopolymers and copolymers, high density polyethylene (HDPE) homopolymers and copolymers, high molecular weight polyethylene (PE-HMW) homopolymers and copolymers, ultra-high molecular weight polyethylene (PE-UHMW) homopolymers, and polypropylene homopolymers and copolymers, and mixtures thereof.

7. Method for producing a coated metal sheet, comprising the steps of:
i) feeding the metal sheet into an extrusion coating arrangement, and
ii) extrusion coating of at least one surface of the metal sheet with the polymer composition according to any one of claims 1 to 6 to obtain a coated metal sheet.

8. The method according to claim 7, wherein the metal sheet is an aluminium sheet or an aluminium alloy sheet.

9. The method according to claim 7 or claim 8, wherein the polymer composition is applied in the form of a curtain.

10. The method according to any one of claims 7 to 9, wherein the method comprises a step iii) of cooling the coated metal sheet.

11. The method according to any one of claims 7 to 10, wherein the coating has a thickness of about 0.2-30 µm, preferably about 0.5-20 µm, more preferably about 1-15 µm, still more preferably 2-12 µm.

12. The method according to any one of claims 7 to 11, wherein the method further comprises a step of subjecting the metal sheet to a pre-treatment process prior to step i), preferably a chromium-free pre-treatment process.

13. The method according to any one of claims 7 to 11, wherein the method
- does not comprise the application of an adhesion layer prior to step ii); and/or
- does not comprise a step of pre-treating the metal sheet prior to step i).

14. Coated metal sheet obtainable in a method according to any one of claims 7 to 13.

15. Use of a coated metal sheet according to claim 14 for the production of food or beverage containers, preferably beverage cans.
